# EUROPÄISCHE PATENTSCHRIFT

(11) **EP 2 599 259 B1**
(45) Veröffentlichungstag und Bekanntmachung des Hinweises auf die Patenterteilung: **12.12.2018**
(21) Anmeldenummer: 11724193.5
(22) Anmeldetag: 07.06.2011
(51) Int. Cl.: H04L 12/10, H04L 12/40, H02J 7/00

(54) **ENERGIESPARSCHALTUNG FÜR EIN NETZWERKGESPEISTES GERÄT, NETZWERKANORDNUNG UND ENERGIESPARVERFAHREN**
POWER SAVING SWITCH FOR NETWORK FEEDING APPARATUS, NETWORK ARRANGEMENT AND ENERGY SAVING METHOD
COMMUTATEUR À ÉCONOMIE D'ÉNERGIE POUR APPAREIL D'ALIMENTATION DE RÉSEAU, AGENCEMENT DU RÉSEAU ET MÉTHODE D'ÉCONOMIE D'ÉNERGIE

(30) Priorität: 28.07.2010 DE 102010032513
(43) Veröffentlichungstag der Anmeldung: 05.06.2013
(73) Patentinhaber: Fujitsu Technology Solutions Intellectual Property GmbH, 80807 München (DE)
(72) Erfinder: RUEF, Robert, 86316 Friedberg (DE)
(74) Vertreter: Epping - Hermann - Fischer
(86) Internationale Anmeldenummer: PCT/EP2011/059384
(87) Internationale Veröffentlichungsnummer: WO 2012/013404

(56) Entgegenhaltungen:
- WO-A2-2004/040891
- US-A1- 2005 264 973
- US-B1- 7 355 416

## Beschreibung

Die Anmeldung betrifft eine Energiesparschaltung für ein netzwerkgespeistes Gerät mit einer Wandlerschaltung zum Erzeugen einer Betriebsspannung für das Gerät aus einer über ein Netzwerk bereitstellbaren Versorgungsspannung. Die Anmeldung betrifft des Weiteren eine Netzwerkanordnung, umfassend eine Versorgungseinheit und wenigstens ein netzwerkgespeistes Gerät sowie ein Energiesparverfahren für ein netzwerkgespeistes Gerät.

Aus dem Stand der Technik sind unterschiedliche Verfahren und Vorrichtungen zur Fern- bzw. Netzwerkspeisung elektrischer Geräte bekannt. Beispielsweise ist aus dem als "Power over Ethernet" (PoE) bekannten IEEE-Standard 802.3af bekannt, Netzwerkkomponenten mit einer verhältnismäßig geringen Leistungsaufnahme von circa 5 bis 15 W über eine Netzwerkleitung eines lokalen Datennetzwerks (LAN) mit einer Versorgungsspannung zu versorgen.

Die Vorteile einer Netzwerkspeisung von Geräten liegt zum einen darin, dass gesonderte Stromversorgungskabel bzw. Stromversorgungseinheiten im Bereich der Geräte eingespart werden können. Zudem kann die Energieversorgung der entsprechenden Geräte durch eine unterbrechungsfreie Stromversorgung auf Seiten der Versorgungseinheit zentral für alle netzwerkgespeisten Geräte sichergestellt werden.

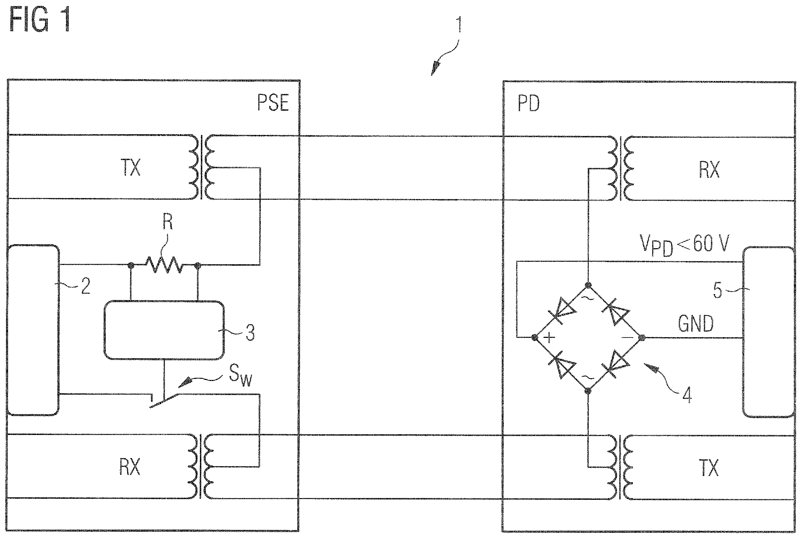

Figur 1 zeigt eine gattungsgemäße Anordnung zur Fernspeisung eines netzwerkgespeisten Verbrauchers (englisch: powered device, PD). Das netzwerkgespeiste Gerät PD ist über ein Netzwerkkabel 1 mit einer Versorgungseinheit (englisch: Power Sourcing Equipment, PSE), verbunden.

In der dargestellten Anordnung umfasst das Netzwerkkabel 1 zwei Adernpaare, jeweils eins zum gleichzeitigen Senden (englisch: transmit, TX) und Empfangen (englisch: receive, RX). Die Sende- bzw. Empfangssignale werden jeweils als hochfrequente Wechselspannungssignale übertragen. Diese hochfrequenten Wechselspannungssignale werden durch zwei Übertrager auf Seiten der Versorgungseinheit PSE auf eine Gleichspannung aufgeprägt. Die aufgeprägte Gleichspannung dient als Versorgungsspannung für das netzwerkgespeiste Gerät PD, und wird dort mittels zwei weiterer Übertrager von den hochfrequenten Wechselspannungssignalen getrennt.

Die Versorgungseinheit PSE umfasst eine Spannungsquelle 2 zum Bereitstellen der Versorgungsspannung. Die Versorgungseinheit PSE umfasst des Weiteren eine Überwachungsschaltung 3, die die Spannungsquelle 2 wahlweise mit den Übertragern der Versorgungseinheit PSE verbindet. Das netzwerkgespeiste Gerät PD umfasst einen Gleichrichter 4 sowie eine Wandlerschaltung 5 zum Umwandeln der bereitgestellten Versorgungsspannung in eine Betriebsspannung für das netzwerkgespeiste Gerät PD.

Um unnötige Leitungs- und Übertragungsverluste zu vermeiden, umfasst die Versorgungseinheit PSE Mittel zum Erkennen, ob ein netzwerkgespeistes Geräts PD an das Netzwerkkabel 1 angeschlossen ist. Neben der Erkennung, ob überhaupt ein netzwerkgespeistes Gerät PD an die Versorgungseinheit PSE angeschlossen ist, dienen die Mittel auch dazu, eine von unterschiedlichen Leistungsklassen des netzwerkgespeisten Geräts PD zu erkennen. Hierzu überwacht die

Überwachungsschaltung 3 einen Spannungsabfall der Versorgungsspannung an einem Widerstand R und bestimmt somit mittelbar den Innenwiderstand des angeschlossenen Geräts PD. Sinkt der Strom durch den Widerstand R unter einen vorbestimmten Schwellwert, geht die Überwachungsschaltung 3 der Versorgungseinheit PSE davon aus, dass das netzwerkgespeiste Gerät PD von dem Netzwerkkabel 1 abgetrennt wurde und unterbricht die Bereitstellung der Versorgungsspannung über ein Schaltelement Sw, beispielsweise ein Relais oder Halbleiterschaltelement.

Die oben genannte Anordnung und die zugehörigen Protokolle zur Geräteerkennung eignen sich gut zur Versorgung von Netzwerkkomponenten, die in der Regel einen weitgehend konstanten Betriebsstrom aufnehmen und bei Betrieb des Netzwerks eingeschaltet bleiben. Sie sind jedoch problematisch bei der Versorgung von Endgeräten, die benutzergesteuert ein- und ausgeschaltet werden.

Hat ein solches Endgerät in einem ausgeschalteten oder Energiesparzustand einen zu geringen Stromverbrauch, der unterhalb des vorbestimmten Grenzwerts liegt, wird die Versorgungsspannung von Seiten der Versorgungseinrichtung PSE vollständig unterbrochen, sodass ein Aufwecken aus einem ausgeschalteten bzw. Energiesparzustand seitens des Geräts PD nicht mehr möglich ist. Ist der Innenwiderstand des netzwerkgespeisten Geräts hingegen so niedrig, dass die Versorgungseinheit das netzwerkgespeiste Gerät auch im ausgeschalteten bzw. Energiesparzustand erkennt, führt die Versorgungseinheit kontinuierlich eine Initialisierungssequenz aus. Dies führt zu einer schlechten Energiebilanz sowohl für das netzwerkgespeiste Gerät als auch für die Versorgungseinheit und somit gegebenenfalls zu einem Verstoß gegen Auflagen zum Betrieb solcher Geräte.

Aus der WO 2004/040891 A2 ist eine Schaltungsanordnung und ein Verfahren zum Senden einer letzten Meldung in ein xDSL-Netz bekannt. Sie betrifft eine Schaltungsanordnung mit einem xDSL-Modem zum Verbinden eines xDSL-Netzes und eines lokalen Netzes (z. B. Ethernet) und mit einer Spannungsversorgungsschaltung für das xDSL-Modem, die zumindest einen Spannungseingang und eine Kontrollschaltung für die Eingangsspannung und zumindest eine Pufferkapazität zur Speicherung von Strom aufweist. Dabei sind Sendemittel vorgesehen, die im Falle eines Stromausfalles eine letzte Meldung (Dying Gasp Meldung) durch das durch die Pufferkapazität gespeiste xDSL-Modem in das xDSL-Netz versenden. Die Spannungsversorgung der Schaltungsanordnung erfolgt unabhängig von dem xDSL-Netz bzw. dem lokalen Netz.

Eine Aufgabe der vorliegenden Erfindung ist es, eine Energiesparschaltung für ein netzwerkgespeistes Gerät zu beschreiben, die die oben genannten Probleme ganz oder teilweise löst. Des Weiteren soll eine Netzwerkanordnung beschrieben werden, die zur energieeffizienten Versorgung eines netzwerkgespeisten Geräts geeignet ist. Schließlich soll ein Energiesparverfahren für ein netzwerkgespeistes Gerät angegeben werden.

Die oben genannte Aufgabe wird durch eine Energiesparschaltung für ein netzwerkgespeistes Gerät mit einer Wandlerschaltung zum Erzeugen einer Betriebsspannung für das Gerät aus einer über ein lokales Datennetzwerk bereitstellbaren Versorgungsspannung gelöst. Die Energiesparschaltung umfasst wenigstens ein Schaltelement zum Trennen wenigstens einer elektrischen Verbindung zwischen dem lokalen Datennetzwerk und der Wandlerschaltung, wenigstens eine Steuerschaltung zum Ansteuern des wenigstens einen Schaltelements in Abhängigkeit von vom Gerät empfangenen Steuersignalen zum Ein- und/oder Ausschalten sowie wenigstens einen Energiepuffer zum Speichern der Energie von regelmäßig von einer Versorgungseinheit über das lokale Datennetzwerk bereitgestellten Spannungsimpulsen zum Versorgen der Steuerschaltung mit einer Betriebsenergie.

Durch das Vorsehen einer weitgehend unabhängig von der Wandlerschaltung betreibbaren Steuerschaltung und dem Puffern von über das Netzwerk bereitgestellten Spannungsimpulsen in einem Energiepuffer zur Versorgung der Steuerschaltung mit einer Betriebsenergie kann auf eine Netzwerkspeisung des netzwerkgespeisten Geräts in einem ausgeschalteten oder Energiesparzustand verzichtet werden. Auf diese Weise kann die Energieaufnahme des netzwerkgespeisten Geräts in einem ausgeschalteten oder Energiesparzustand beinahe auf Null abgesenkt werden, ohne dass auf die Vorteile einer Netzwerkspeisung oder einer geräteseitigen Aktivierung bzw. Deaktivierung verzichtet werden muss. Für eine zur Versorgung des netzwerkgespeisten Geräts eingesetzte Versorgungseinheit ist das Gerät wegen des hohen Innenwiderstands bei geöffnetem Schaltelement nicht mehr erkennbar, so dass auch keine Initialisierungssequenz ausgeführt wird.

Gemäß einer bevorzugten Ausgestaltung ist der Energiepuffer als Kondensator ausgestaltet, wobei die Pufferkapazität ausreicht, um die Steuerschaltung für einen vorbestimmten Zeitraum mit einer Betriebsenergie zu versorgen. Die Vorsehung eines Kondensators als Energiepuffer ist besonders preisgünstig und erlaubt zugleich den Verzicht auf Gefahrstoffe in dem netzwerkgespeisten Gerät, wie sie in wiederaufladbaren Batterien vorkommen. Dabei kann die Kapazität des Kondensators auf eine in der Regel durch den Standard vorbestimmte Zeitspanne zwischen über das Netzwerk bereitgestellten Spannungsimpulsen eingestellt werden.

Gemäß einer weiteren vorteilhaften Ausgestaltung ist das wenigstens eine Schaltelement als stromlos arbeitendes Halbleiterschaltelement, insbesondere als MOSFET, ausgestaltet. Die Verwendung eines MOSFET oder eines ähnlichen Schaltelements erlaubt das Halten eines ein- und/oder ausgeschalteten Zustands des Schaltelements durch die Steuerschaltung, ohne dass hierzu ein Arbeitsstrom benötigt wird.

Die oben genannte Aufgabe wird ebenso gelöst durch eine Netzwerkanordnung umfassend eine Versorgungseinheit zum Erkennen und Versorgen von netzwerkgespeisten Geräten mit einer Versorgungsspannung, wenigstens ein netzwerkgespeistes Gerät mit einer Energiesparschaltung gemäß einer der obigen Ausgestaltungen und wenigstens ein Netzwerkkabel, über das die Versorgungseinheit und das wenigstens eine netzwerkgespeiste Gerät miteinander verbunden sind.

Eine derartige Anordnung ist konform zu bekannten Standards zur Netzwerkspeisung von Geräten. Lediglich auf Seiten des netzwerkgespeisten Geräts muss eine Energiesparschaltung vorgesehen werden, wie sie oben beschrieben worden ist. Änderungen auf Seiten der Versorgungseinheit oder Netzwerkverkabelung sind dagegen nicht erforderlich.

Die oben genannte Aufgabe wird auch gelöst durch ein Energiesparverfahren für ein netzwerkgespeistes Gerät umfassend die Schritte:
- Speichern von elektrischer Energie von regelmäßig von einer Versorgungseinheit über ein lokales Datennetzwerk bereitgestellten Spannungsimpulsen in einem Energiepuffer,
- Betreiben einer Steuerschaltung mit in dem Energiepuffer gespeicherter Energie,
- Erkennen eines ersten geräteseitigen Steuersignals zum Einschalten des netzwerkgespeisten Geräts durch die Steuerschaltung und
- Ansteuern eines Schaltelements zum Schließen einer elektrischen Verbindung zwischen dem Netzwerk und einer Wandlerschaltung des netzwerkgespeisten Geräts durch die Steuerschaltung.

Die oben genannten Verfahrensschritte erlauben die kontinuierliche Überwachung eines netzwerkgespeisten Geräts auf ein Steuersignal zum Einschalten, selbst wenn die Wandlerschaltung des elektrischen Geräts elektrisch von dem Netzwerk getrennt ist. Auf diese Weise kann eine Reaktivierung des elektrischen Geräts auch in einem Ruhe- oder Energiesparzustand vorgenommen werden, in dem das elektrische Gerät keine elektrische Energie aus dem Netzwerk mehr aufnimmt.

Weitere vorteilhafte Ausgestaltungen sind in den nachfolgend beschriebenen Ausführungsbeispielen sowie in den abhängigen Ansprüchen offenbart.

Die Erfindung wird nachfolgend anhand von Ausführungsbeispielen unter Bezugnahme auf die angehängten Figuren näher beschrieben. In den Figuren zeigen:
- Figur 1: eine Netzwerkanordnung zur Fernspeisung eines netzwerkgespeisten Geräts,
- Figur 2: eine schematische Darstellung einer Energiesparschaltung für ein netzwerkgespeistes Gerät,
- Figur 3: ein Ablaufdiagramm eines Energiesparverfahrens für ein netzwerkgespeistes Gerät und
- Figur 4: einen Spannungsverlauf während einer Initialisierungsphase gemäß dem Power-over-Ethernet-Standard.

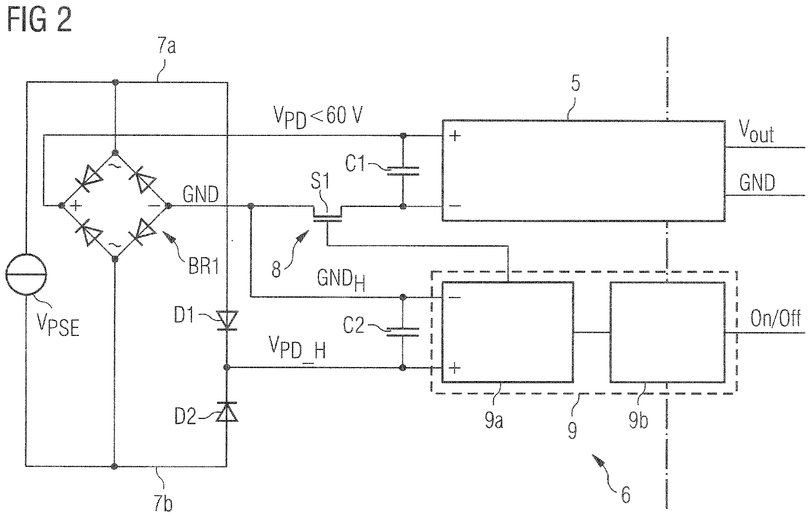

In der Figur 2 ist eine Energiesparschaltung 6 zur Verwendung in einer Netzwerkanordnung, wie sie bereits unter Bezugnahme auf die Figur 1 beschrieben wurde, dargestellt.

Die Energiesparschaltung 6 ist über zwei Versorgungsleitungen 7a und 7b mit der Netzwerkanordnung verbunden. Hierüber kann eine Versorgungsspannung V_{PSE} durch eine in der Figur 2 nicht dargestellte Versorgungseinheit PSE bereitgestellt werden. Die Polarität der Versorgungsspannung V_{PSE} ist geräteseitig nicht bekannt, sodass ein Gleichrichter BR1 zwischen die erste Versorgungsleitung 7a und die zweite Versorgungsleitung 7b geschaltet ist. Der Gleichrichter BR1 stellt bei anliegender Versorgungsspannung V_{PSE} eine Gleichspannung V_{PD} im Bereich zwischen 36 und 57 V, insbesondere 44 V oder 48 V für die IEEE-Standards 802.3af bzw. 802.3at, bereit. Diese Spannung dient zum Laden eines Glättungskondensators C1, der parallel zu einer nachgeordneten Wandlerschaltung 5 angeordnet ist. Um die Detektion des netzwerkgespeisten Geräts PD nicht zu stören, besitzt der Glättungskondensator bevorzugt eine Kapazität von weniger als 120 nF.

Um die durch den Glättungskondensator C1 und die Wandlerschaltung 5 dargestellte elektrische Last von den Versorgungsleitungen 7a und 7b trennen zu können, ist zwischen dem Masseanschluss GND des Gleichrichters BR1 und dem negativen Anschluss des Glättungskondensators C1 bzw. der Wandlerschaltung 5 ein Schaltelement 8 vorgesehen, mit dem eine elektrische Verbindung zwischen diesen Punkten getrennt werden kann. Selbstverständlich ist eine Trennung auch an anderer Stelle möglich. Im Ausführungsbeispiel handelt es sich bei dem Schaltelement 8 um einen selbstsperrenden MOSFET S1. Die Wandlerschaltung 5 wird daher nur mit dem Gleichrichter BR1 verbunden, wenn ein Steuereingang des MOSFET S1 mit einer Schaltspannung beaufschlagt wird.

Zum Bereitstellen der entsprechenden Schaltspannung für das Schaltelement 8 umfasst die Energiesparschaltung 6 des Weiteren eine Steuerschaltung 9. Die Steuerschaltung 9 ist im Ausführungsbeispiel zweiteilig dargestellt und umfasst insbesondere einen Mikrocontroller 9a mit zugehöriger Spannungsregelung und Beschaltung sowie einen Übertrager 9b zum Einkoppeln von Steuersignalen von der Sekundärseite. An Stelle der zweiteiligen Anordnung umfassend einen Mikrocontroller 9a und einen Übertrager 9b ist selbstverständlich auch die Verwendung einer diskreten Schaltung möglich.

Um zumindest den Mikrocontroller 9a der Steuerschaltung 9 ständig mit einer Betriebsspannung zu versorgen, ist zwischen den Masseausgang GND der Wandlerschaltung BR1 und die zwei Versorgungsleitungen 7a und 7b ein Energiepuffer in Form eines Kondensators C2 geschaltet. Dabei wird im Ausführungsbeispiel der untere Anschluss des Kondensators C2 über die Dioden D1 oder D2 mit einer positiven Spannungskomponente der Versorgungsleitung 7a beziehungsweise der Versorgungsleitung 7b versorgt. Je nach Ausgestaltung und Zugänglichkeit der Gleichrichterschaltung BR1 des oberen Lastpfads kann die Gleichrichtung anstelle über die Dioden D1 und D2 auch über den Gleichrichter BR1 erfolgen.

Der Kondensator C2 ist so dimensioniert, dass er über so genannte Detektionsimpulse gemäß dem Power-over-Ethernet (PoE) Standard so weit aufgeladen wird, dass er zur Versorgung des Mikrocontrollers eine ausreichende Ladung bereithält. Beispielsweise sind beim PoE-Standard Spannungsimpulse zwischen 2,7 und 10 V vorgesehen, die regelmäßig von der Versorgungseinheit PSE zur Verfügung gestellt werden. Gemäß Standard beträgt die minimale Auszeit zwischen aufeinander folgenden Impulsen mindestens 2 s. Bei einer Kapazität von beispielsweise 100 nF kann damit ein besonders Energie sparender Mikroprozessor mit einer Stromaufnahme von beispielsweise 25 nA dauerhaft mit einer Betriebsspannung versorgt werden.

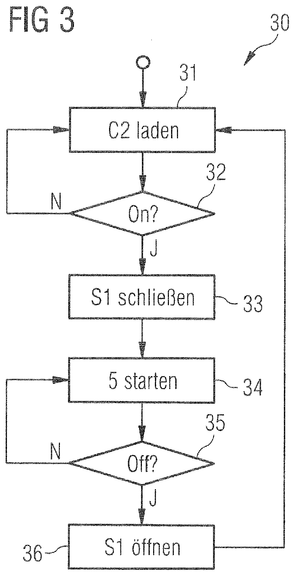

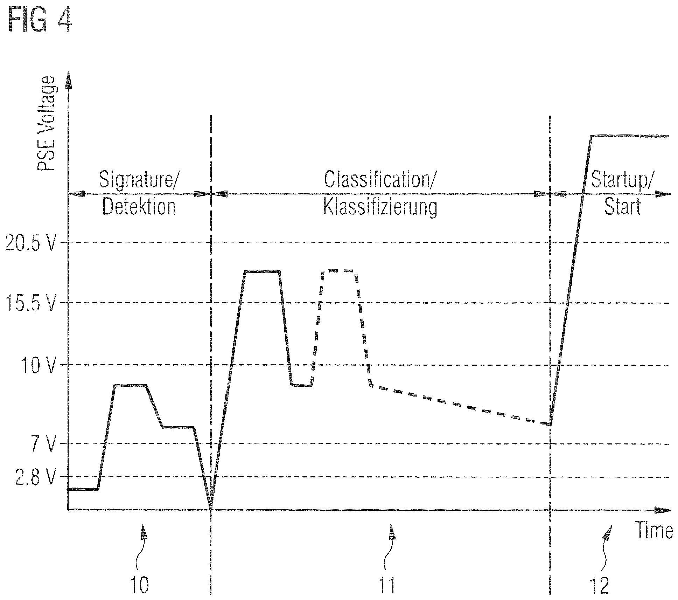

Die konkrete Signalisierung im Ausführungsbeispiel wird nachfolgend anhand des in der Figur 3 dargestellten Flussdiagramms sowie des in der Figur 4 dargestellten Spannungsverlaufs näher beschrieben.

Zunächst befindet sich das netzwerkgespeiste Gerät PD in einem ausgeschalteten Zustand. In diesem Zustand ist das Schaltelement 8 geöffnet, sodass die Wandlerschaltung 5 keine Betriebsspannung zur Versorgung des elektrischen Geräts bereitstellt. In diesem Betriebszustand trennt die Versorgungseinheit PSE die Spannungsquelle 2 standardgemäß von den Versorgungsleitungen 7a und/oder 7b.

In diesem Betriebszustand wird jedoch regelmäßig ein so genannter Detektionsimpuls 10 von der Versorgungseinheit PSE bereitgestellt. Die Charakteristik des Detektionsimpulses 10 ist in der Figur 4 dargestellt. Der Detektionsimpuls 10 wird über die Dioden D1 und D2 und Teile des Gleichrichters BR1 gleichgerichtet und dient zur Ladung des Kondensators C2 (Schritt 31).

In dieser Betriebsphase weist die Energiesparschaltung 6 einen Innenwiderstand auf, der oberhalb eines vorbestimmten Grenzwertes, beispielsweise 33 kQ, liegt. Die Überwachungsschaltung 3 erkennt daher nicht, dass ein netzwerkgespeistes Gerät PD an die Versorgungseinheit PSE angeschlossen ist und begibt sich ihrerseits in einen Energiesparzustand, bis der nächste Detektionsimpuls 10 ausgesendet wird.

Beim Erhalt eines sekundärseitigen Einschaltsignals über den Übertrager 9b wird der Mikrocontroller 9a der Steuerschaltung 9 aktiviert (Schritt 32). Das Einschaltsignal dient als Trigger-Impuls für die Steuerschaltung 9. Beispielsweise kann es sich um das Drücken eines sekundärseitig angeordneten Einschalttasters an dem netzwerkgespeisten Gerät PD handeln.

Liegt ein solches Einschaltsteuersignal vor, aktiviert die Steuerschaltung 9 das Schaltelement 8 durch Anlegen einer entsprechenden Steuerspannung (Schritt 33). Somit wird die Wandlerschaltung 5 mit den Versorgungsleitungen 7a und 7b und der Energiesparschaltung 6 verbunden.

Beim Erhalt des nächsten Detektionsimpulses 10 reagiert die Wandlerschaltung 5 gemäß der dem verwendeten Protokoll zugrunde liegenden Protokollierung, sodass die Überwachungsschaltung 3 der Versorgungseinheit PSE den Anschluss des Geräts PD erkennen kann. Insbesondere führt ein Ansteigen des Stromflusses über die Versorgungsleitungen 7a und 7b zu einem größeren Spannungsabfall am Widerstand R (Schritt 34). Beispielsweise weist das netzwerkgespeiste Gerät PD gemäß dem PoE-Standard in dieser Betriebsphase einen Innenwiderstand im Bereich von 15 bis 33 kΩ auf.

Als Reaktion auf eine erfolgreiche Detektion sendet die Versorgungseinheit PSE als nächstes einen oder mehrere so genannten Klassifizierungsimpuls 11 an das netzwerkgespeiste Gerät PD. Die Überwachungsschaltung 3 der Versorgungseinheit PSE bestimmt wiederum die Stromaufnahme des netzwerkgespeisten Geräts PD, um beispielsweise eine von vier möglichen Leistungsklassen für das Gerät PD zu bestimmen.

Erst nach erfolgreicher Signalisierung der Leistungsklasse aktiviert die Versorgungseinheit PSE in einer Einschaltphase 12 daraufhin eine Versorgungsspannung V_{PSE} von beispielsweise 44 bis 48 V. In diesem Zustand befinden sich sowohl die Versorgungseinheit PSE als auch das netzwerkgespeiste Gerät PD in einem vollständig eingeschalteten Zustand. Die Steuerschaltung 9 hält in diesem Betriebszustand ein Ansteuersignal für das Schaltelement 8 auf einem vorbestimmten Wert, um die Wandlerschaltung 5 dauerhaft mit den Versorgungsleitungen 7a und 7b zu verbinden.

Soll das netzwerkgespeiste Gerät PD wieder von den Versorgungsleitungen 7a und 7b getrennt werden, signalisiert das netzwerkgespeiste Gerät PD sekundärseitig ein geeignetes Abschaltsignal an die Steuerschaltung 9. Beispielsweise kann es sich dabei um ein software- oder hardwareerzeugtes Abschaltsignal handeln. Sobald der zweite Schaltungsteil 9b der Steuerschaltung 9 das Abschaltsignal erkennt (Schritt 35), wird die Wandlerschaltung 5 durch Öffnen des Schaltelements 8 von den Versorgungsleitungen 7a und 7b getrennt (Schritt 36) und damit deaktiviert. Das netzwerkgespeiste Gerät schaltet ab.

Nachfolgend erkennt die Versorgungseinheit PSE ein Ansteigen des Innenwiderstands an seinem Versorgungsausgang und deaktiviert daraufhin die Bereitstellung der Versorgungsspannung V_{PSE}. Somit kann sich auch die Versorgungseinheit PSE in einen Energiesparzustand begeben, in dem, wie oben beschrieben, nur Detektionsimpulse 10 in einem zeitlich vorbestimmten Abstand ausgesandt werden. Somit befinden sich wiederum die Versorgungseinheit PSE und das netzwerkgespeiste Gerät PD in einem Zustand sehr niedriger Energieaufnahme, sodass die Erfordernisse geltender und künftiger Standards bezüglich der Energieeffizienz in so genannten Standby-Zuständen eingehalten werden können.

Die oben beschriebenen Schaltungsanordnungen und Verfahren eignen sich insbesondere zur Versorgung von Endgeräten, die benutzergesteuert ein- oder ausgeschaltet werden. Ein solches Gerät ist insbesondere ein so genannter Zero Client, der lediglich einen Grafikchip zur Anzeige von Bildschirmmasken sowie einen einfachen Schnittstellenanschluss zum Anschluss von Tastatur, Maus und ähnlichen Eingabegeräten umfasst. Die eigentliche Rechenleistung wird dabei von einem zentral betriebenen Serversystem bereitgestellt. Durch die Verwendung solcher minimal ausgestalteter Terminaleinheiten, die zudem besonders effizient über ein Netzwerk ferngespeist werden, kann insbesondere die Energieeffizienz mittlerer und größerer Firmennetzwerke verbessert werden. Dabei kann jeder Benutzer, wie zuvor von Einzelplatzcomputern bekannt, sein Terminal individuell ein- oder ausschalten.

Die oben genannte Energiesparschaltung und zugehörigen Verfahren eignen sich gleichermaßen zur Verwendung in unterschiedlichen Standards zur Fernspeisung von Geräten. Wichtig für das Funktionieren der Schaltung ist dabei lediglich, dass Spannungsimpulse mehr oder weniger regelmäßig über die zum Anschluss des netzwerkgespeisten Geräts verwendeten Netzwerkleitungen übertragen werden.

Dabei muss es sich nicht zwingenderweise um die Detektionsimpulse 10 gemäß dem PoE-Standard handeln. Es ist auch vorstellbar, andere oder zusätzliche Daten-, Signalisierungs- oder Versorgungsimpulse eines Netzwerksprotokolls zum Laden des Energiepuffers C2 zu verwenden. Insbesondere können leistungsfähigere, als Steuerschaltungen verwendete Mikrocontroller mit einer ausreichenden Betriebsspannung versehen werden, wenn die Versorgungseinheit regelmäßig auch Klassifizierungsimpulse aussendet oder sich vorübergehen in eine Startphase begibt.

Für das erfindungsgemäße Verfahren ist es auch unerheblich, ob die Fernspeisung über Adernpaare zur Signalisierung der Daten selbst, wie in Figur 1 dargestellt, oder über gesonderte Adernpaare einer Netzwerkleitung erfolgt.

### Bezugszeichenliste

- 1: Netzwerkkabel
- 2: Spannungsquelle
- 3: Überwachungsschaltung
- 4: Gleichrichter
- 5: Wandlerschaltung
- 6: Energiesparschaltung
- 7: Versorgungsleitung
- 8: Schaltelement
- 9: Steuerschaltung
- 10: Detektionsimpuls
- 11: Klassifizierungsimpuls
- 12: Einschaltphase

- PSE: Versorgungseinheit
- PD: netzwerkgespeistes Gerät
- S1: MOSFET
- C1, C2: Kondensator
- BR1: Gleichrichter
- D1, D2: Diode
- R: Widerstand
- Sw: Schaltelement

- V_{PSE}: Versorgungsspannung
- V_{PD}: Gleichspannung
- V_{OUT}: Betriebsspannung

## Patentansprüche

1. Energiesparschaltung (6) für ein netzwerkgespeistes Gerät (PD) mit einer Wandlerschaltung (5) zum Erzeugen einer Betriebsspannung (V_{OUT}) für das Gerät (PD) aus einer über ein lokales Datennetzwerk bereitstellbaren Versorgungsspannung (V_{PSE}), umfassend:
- wenigstens ein Schaltelement (8) zum Trennen wenigstens einer elektrischen Verbindung zwischen dem lokalen Datennetzwerk und der Wandlerschaltung (5),
- wenigstens eine Steuerschaltung (9) zum Ansteuern des wenigstens einen Schaltelements (8) in Abhängigkeit von vom Gerät (PD) empfangenen Steuersignalen zum Ein- und/oder Ausschalten sowie
- wenigstens einen Energiepuffer zum Speichern der Energie von regelmäßig von einer Versorgungseinheit (PSE) über das lokale Datennetzwerk bereitgestellten Spannungsimpulsen (10, 11) zum Versorgen der Steuerschaltung (9) mit einer Betriebsenergie.

2. Energiesparschaltung (6) nach Anspruch 1,
**dadurch gekennzeichnet, dass**
der Energiepuffer als Kondensator (C2) ausgestaltet ist, wobei die Pufferkapazität so bemessen ist, dass sie ausreicht, um die Steuerschaltung (9) für einen vorbestimmten Zeitraum mit einer Betriebsenergie zu versorgen.

3. Energiesparschaltung (6) nach einem der Ansprüche 1 oder 2, **gekennzeichnet durch**
wenigstens eine zwischen wenigstens zwei Versorgungsleitungen (7a, 7b) des lokalen Datennetzwerks und dem Energiepuffer der Energiesparschaltung (6) angeordnete Gleichrichterschaltung.

4. Energiesparschaltung (6) nach einem der Ansprüche 1 bis 3, **dadurch gekennzeichnet, dass**
das wenigstens eine Schaltelement (8) als Halbleiterschaltelement, insbesondere als MOSFET (S1), ausgestaltet ist.

5. Netzwerkanordnung, umfassend
- eine Versorgungseinheit (PSE) zum Erkennen und Versorgen von netzwerkgespeisten Geräten (PD) mit einer Versorgungsspannung (V_{PSE}),
- wenigstens ein netzwerkgespeistes Gerät (PD) mit einer Energiesparschaltung (6) nach einem der Ansprüche 1 bis 4 und
- wenigstens ein Netzwerkkabel (1), über das die Versorgungseinheit (PSE) und das wenigstens eine netzwerkgespeiste Gerät (PD) miteinander verbunden sind.

6. Netzwerkanordnung nach Anspruch 5,
**dadurch gekennzeichnet, dass**
die Versorgungseinheit (PSE) und die Wandlerschaltung (5) des wenigstens einen netzwerkgespeisten Geräts (PD) dem Power-over-Ethernet-Standard entsprechen, wobei Detektionsimpulse (10) und/oder Klassifizierungsimpulse (11) gemäß dem Power-over-Ethernet-Standard zum Laden des Energiepuffers verwendet werden.

7. Netzwerkanordnung nach einem der Ansprüche 5 oder 6,
**dadurch gekennzeichnet, dass**
das Netzwerkkabel (1) wenigstens zwei Adern zum Bereitstellen der Versorgungsspannung (V_{PSE}) und wenigstens zwei weitere, davon elektrisch isolierte Adern zum Übertragen von Daten von und/oder zu dem netzwerkgespeisten Gerät (PD) umfasst.

8. Netzwerkanordnung nach einem der Ansprüche 5 bis 7,
**dadurch gekennzeichnet, dass**
das Netzwerkkabel wenigstens vier Adern zum Bereitstellen der Versorgungsspannung (V_{PSE}) und zum Übertragen von Daten von und/oder zu dem netzwerkgespeisten Gerät (PD) umfasst, wobei die zu übertragenden Daten als hochfrequentes Signal auf eine als Versorgungsspannung verwendete Gleichspannung (V_{PD}) aufmoduliert werden.

9. Energiesparverfahren für ein netzwerkgespeistes Gerät (PD), umfassend die Schritte:
- Speichern von elektrischer Energie von regelmäßig von einer Versorgungseinheit (PSE) über ein lokales Datennetzwerk bereitgestellten Spannungsimpulse (10, 11) in einem Energiepuffer,
- Betreiben einer Steuerschaltung (9) mit in dem Energiepuffer gespeicherter Energie,
- Erkennen eines ersten geräteseitigen Steuersignals zum Einschalten des netzwerkgespeisten Geräts (PD) durch die Steuerschaltung (9),
- Ansteuern eines Schaltelements (8) zum Schließen einer elektrischen Verbindung zwischen dem Netzwerk und einer Wandlerschaltung (5) des netzwerkgespeisten Geräts (PD) durch die Steuerschaltung (9).

10. Energiesparverfahren nach Anspruch 9,
**dadurch gekennzeichnet, dass**
nach Schließen der elektrischen Verbindung die folgenden Schritte durchgeführt werden:
- Erkennen eines Detektionsimpulses (10) durch die Wandlerschaltung (5),
- Erkennen einer Leistungsklasse des elektrischen Geräts (PD) durch die Versorgungseinheit (PSE) im lokalen Datennetzwerk,
- Bereitstellen einer Versorgungsspannung (V_{PSE}) über das Netzwerk durch die Versorgungseinheit (PSE) und
- Erzeugen einer Betriebsspannung (V_{OUT}) zum Betrieb des Geräts (PD) aus der über das Netzwerk bereitgestellten Versorgungsspannung (V_{PSE}) durch die Wandlerschaltung (5).

11. Energiesparverfahren nach einem der Ansprüche 9 oder 10, **gekennzeichnet durch** die zusätzlichen Schritte:
- Erkennen eines zweiten geräteseitigen Steuersignals zum Ausschalten des netzwerkgespeisten Geräts (PD) durch die Steuerschaltung (9) und
- Ansteuern des Schaltelements (8) zum Trennen der elektrischen Verbindung zwischen dem lokalen Datennetzwerk und der Wandlerschaltung (5) des elektrischen Geräts (PD) durch die Steuerschaltung (9).

## Claims

1. Energy-saving circuit (6) for a network-powered device (PD) with a converter circuit (5) for generating an operating voltage (V_{OUT}) for the device (PD) from a supply voltage (V_{PSE}) which can be provided via a local data network, including:
- at least one switching element (8) for breaking at least one electrical connection between the local data network and the converter circuit (5),
- at least one control circuit (9) for actuating the at least one switching element (8) depending upon control signals received by the device (PD), for switching on and/or switching off, as well as
- at least one energy buffer for storing the energy from voltage pulses (10, 11), regularly provided from a supply unit (PSE) via the local data network, for supplying the control circuit (9) with an operating energy.

2. Energy-saving circuit (6) according to claim 1,
**characterized in that**
the energy buffer is configured as a capacitor (C2), wherein the buffer capacitance is dimensioned such that it is sufficient to supply the control circuit (9) with an operating energy for a predetermined time period.

3. Energy-saving circuit (6) according to one of claims 1 or 2, **characterized by**
at least one rectifier circuit arranged between at least two supply lines (7a, 7b) of the local data network and the energy buffer of the energy-saving circuit (6).

4. Energy-saving circuit (6) according to one of claims 1 to 3, **characterized in that**
the at least one switching element (8) is configured as a semiconductor switching element, in particular as MOSFET (S1).

5. Network arrangement, comprising
- a supply unit (PSE) for recognizing and supplying network-powered devices (PD) with a supply voltage (V_{PSE}),
- at least one network-powered device (PD) with an energy-saving circuit (6) according to one of the claims 1 to 4 and
- at least network cable (1), via which the supply unit (PSE) and the least one network-powered device (PD) are connected with one another.

6. Network arrangement according to claim 5,
**characterized in that**
the supply unit (PSE) and the converter circuit (5) of the at least one network-powered device (PD) meet the Power-over-Ethernet Standard, wherein detection pulses (10) and/or classification pulses (11) according to the Power-over-Ethernet Standard are used to charge the energy buffer.

7. Network arrangement according to one of claims 5 or 6,
**characterized in that**
the network cable (1) includes at least two wires for providing the supply voltage (V_{PSE}) and at least two further wires, electrically insulated therefrom, for transmitting data from and/or to the network-powered device (PD).

8. Network arrangement according to one of claims 5 to 7,
**characterized in that**
the network cable comprises at least four wires for providing the supply voltage (V_{PSE}) and for transmitting data from and/or to the network-powered device (PD), wherein the data to be transmitted are modulated as a high-frequency signal on to a DC voltage (V_{PD}) used as a supply voltage.

9. Energy-saving method for a network-powered device (PD), comprising the steps:
- storing electrical energy from voltage pulses (10, 11) regularly provided by a supply unit (PSE) via a local data network in an energy buffer,
- operating a control circuit (9) with energy stored in the energy buffer,
- recognizing, by the control circuit (9), a first device-side control signal for switching-on the network-powered device (PD),
- actuating, by the control circuit (9), a switching element (8) for closing an electrical connection between the network and a converter circuit (5) of the network-powered device (PD).

10. Energy-saving method according to claim 9,
**characterized in that**
after closing the electrical connection, the following steps are carried out:
- recognizing, by the converter circuit (5), a detection pulse (10),
- recognizing, by the supply unit (PSE), a power class of the electrical device (PD) in the local data network,
- providing, by the supply unit (PSE), a supply voltage (V_{PSE}) via the network, and
- generating, by the converter circuit (5), an operating voltage (V_{OUT}) for operating the device (PD) from the supply voltage (V_{PSE}) provided via the network.

11. Energy-saving method according to one of claims 9 or 10, **characterized by** the additional steps:
- recognizing, by the control circuit (9), a second device-side control signal for switching-off the network-powered device (PD) and
- actuating, by the control circuit (9), the switching element (8) for breaking the electrical connection between the local data network and the converter circuit (5) of the electrical device (PD).

## Revendications

1. Circuit d'économie d'énergie (6) pour un appareil (PD) alimenté par réseau, doté d'un circuit convertisseur (5) destiné à générer une tension de fonctionnement (V_{OUT}) pour l'appareil (PD) à partir d'une tension d'alimentation (V_{PSE}) pouvant être fournie par l'intermédiaire d'un réseau de données local, comprenant :
- au moins un élément de commutation (8) destiné à couper au moins une liaison électrique entre le réseau de données local et le circuit convertisseur (5),
- au moins un circuit de commande (9) destiné à piloter l'au moins un élément de commutation (8) en fonction de signaux de commande reçus par l'appareil (PD), destinés à mettre sous tension et/ou hors tension, ainsi qu'
- au moins un tampon d'énergie destiné à stocker l'énergie d'impulsions de tension (10, 11) fournies régulièrement par une unité d'alimentation (PSE) par l'intermédiaire du réseau de données local, destiné à alimenter le circuit de commande (9) avec une énergie de service.

2. Circuit d'économie d'énergie (6) selon la revendication 1,
**caractérisé en ce que**
le tampon d'énergie est conçu comme condensateur (C2), la capacité du tampon étant dimensionnée de manière à ce qu'elle soit suffisante pour alimenter le circuit de commande (9) avec une énergie de service pour une période de temps prédéterminée.

3. Circuit d'économie d'énergie (6) selon l'une quelconque des revendications 1 ou 2,
**caractérisé par**
au moins un circuit redresseur disposé entre au moins deux lignes d'alimentation (7a, 7b) du réseau de données local et le tampon d'énergie du circuit d'énergie (6).

4. Circuit d'économie d'énergie (6) selon l'une quelconque des revendications 1 à 3,
**caractérisé en ce que**
l'au moins un élément de commutation (8) est conçu comme élément de commutation semi-conducteur, notamment en tant que MOSFET (S1).

5. Agencement de réseau, comprenant
- une unité d'alimentation (PSE) destinée à identifier et alimenter des appareils (PD) alimentés par réseau avec une tension d'alimentation (V_{PSE}),
- au moins un appareil (PD) alimenté par réseau, doté d'un circuit d'économie d'énergie (6) selon l'une quelconque des revendications 1 à 4, et
- au moins un câble de réseau (1) par l'intermédiaire duquel l'unité d'alimentation (PSE) et l'au moins un appareil (PD) alimenté par réseau sont reliés entre eux.

6. Agencement de réseau selon la revendication 5,
**caractérisé en ce que**
l'unité d'alimentation (PSE) et le circuit convertisseur (5) de l'au moins un appareil (PD) alimenté par réseau sont conformes à la norme Power over Ethernet, des impulsions de détection (10) et/ou des impulsions de classification (11) selon la norme Power over Ethernet étant utilisées pour charger le tampon d'énergie.

7. Agencement de réseau selon l'une quelconque des revendications 5 ou 6,
**caractérisé en ce que**
le câble de réseau (1) comprend au moins deux conducteurs destinés à fournir la tension d'alimentation (V_{PSE}) et au moins deux conducteurs supplémentaires, électriquement isolés de ceux-ci, destinés à transmettre des données à partir de et/ou vers l'appareil (PD) alimenté par réseau.

8. Agencement de réseau selon l'une quelconque des revendications 5 à 7,
**caractérisé en ce que**
le câble de réseau comprend au moins quatre conducteurs destinés à fournir la tension d'alimentation (V_{PSE}) et à transmettre des données à partir de et/ou vers l'appareil (PD) alimenté par réseau, les données à transmettre étant modulées en tant que signal à haute fréquence sur une tension continue (V_{PD}) utilisée en tant que tension d'alimentation.

9. Procédé d'économie d'énergie pour un appareil (PD) alimenté par réseau, comprenant les étapes suivantes :
- stockage, dans un tampon d'énergie, d'énergie électrique d'impulsions de tension (10, 11) fournies régulièrement par une unité d'alimentation (PSE) par l'intermédiaire d'un réseau de données local,
- faire fonctionner d'un circuit de commande (9) avec l'énergie stockée dans le tampon d'énergie,
- identification, par le circuit de commande (9), d'un premier signal de commande côté appareil, destiné à mettre sous tension l'appareil (PD) alimenté par réseau,
- pilotage, par le circuit de commande (9), d'un élément de commutation (8) pour fermer une liaison électrique entre le réseau et un circuit convertisseur (5) de l'appareil (PD) alimenté par réseau.

10. Procédé d'économie d'énergie selon la revendication 9,
**caractérisé en ce qu'**
après la fermeture de la liaison électrique, les étapes suivantes sont réalisées :
- identification d'une impulsion de détection (10) par le circuit convertisseur (5),
- identification d'une classe de puissance de l'appareil électrique (PD) par l'unité d'alimentation (PSE) dans le réseau de données local,
- fourniture, par l'unité d'alimentation (PSE), d'une tension d'alimentation (V_{PSE}) par l'intermédiaire du réseau, et
- génération, par le circuit convertisseur (5), d'une tension de fonctionnement (V_{OUT}) destinée à faire fonctionner l'appareil (PD) à partir de la tension d'alimentation (V_{PSE}) fournie par l'intermédiaire du réseau.

11. Procédé d'économie d'énergie selon l'une quelconque des revendications 9 ou 10,
**caractérisé par** les étapes supplémentaires :
- identification, par le circuit de commande (9) d'un deuxième signal de commande côté appareil, destiné à mettre hors tension l'appareil (PD) alimenté par réseau, et
- pilotage, par le circuit de commande (9), de l'élément de commutation (8) pour couper la liaison électrique entre le réseau de données local et le circuit convertisseur (5) de l'appareil électrique (PD).
